## Europäisches Patentamt

(19) **European Patent Office**

**Office européen des brevets**

(11) Veröffentlichungsnummer: **0 280 948**
**B1**

---

(12) ## EUROPÄISCHE PATENTSCHRIFT

(45) Veröffentlichungstag der Patentschrift:
**27.12.90**

(51) Int. Cl.⁵: **G01M 15/00**, G01L 3/22

(21) Anmeldenummer: **88102115.8**

(22) Anmeldetag: **12.02.88**

---

(54) **Elektronischer Beobachter für einen an eine Belastungsmaschine gekoppelten Drehmomenterzeuger sowie Verfahren zur Bestimmung des Momentes und zur Prüfung des Drehmomenterzeugers.**

---

(30) Priorität: **25.02.87 DE 3706125**

(43) Veröffentlichungstag der Anmeldung:
**07.09.88 Patentblatt 88/36**

(45) Bekanntmachung des Hinweises auf die Patenterteilung:
**27.12.90 Patentblatt 90/52**

(84) Benannte Vertragsstaaten:
**CH DE FR GB IT LI SE**

(56) Entgegenhaltungen:
**DE-A- 3 416 496**

(73) Patentinhaber: **Siemens Aktiengesellschaft,
Wittelsbacherplatz 2, D-8000 München 2(DE)**

(72) Erfinder: **Blaschke, Felix, Dr., Steinforststrasse 19,
D-8520 Erlangen(DE)**

---

EP 0 280 948 B1

**Beschreibung**

Die Erfindung betrifft einen elektronischen Beobachter für einen Drehmomenterzeuger, dessen inneres Moment über eine Drehwelle elastisch an das Drehmoment einer Belastungsmaschine gekoppelt ist. Die Erfindung betrifft ferner ein Verfahren zur Bestimmung des inneren Momentes des Drehmomenterzeugers sowie ein Verfahren zum Prüfen des Drehmomenterzeugers, wobei jeweils von dem elektronischen Beobachter Gebrauch gemacht wird.

Bevorzugtes Anwendungsgebiet sind Prüfstände, in denen der Drehmomenterzeuger als Prüfling unter kontrollierten Bedingungen einer Last ausgesetzt wird. Dabei kann es sich z.B. um den Antrieb eines Krans, einer Fördermaschine oder eines Aufzugs handeln, wobei durch die Belastungsmaschine nicht nur das zu hebende Gewicht, sondern auch Trageseile, Übersetzungen, Getriebe und andere Mittel zur Kraftübertragung verkörpert werden müssen. Insbesondere ist als Prüfling ein Fahrzeugmotor vorgesehen, dessen Drehwelle die erforderliche Beschleunigungs- oder Bremsenergie auf das Fahrzeug überträgt. Es kann sich bei dem Drehmoment-Erzeuger aber auch um eine Bremse oder ein Getriebe handeln, die durch Reibung ein inneres Verzögerungsmoment erzeugen.

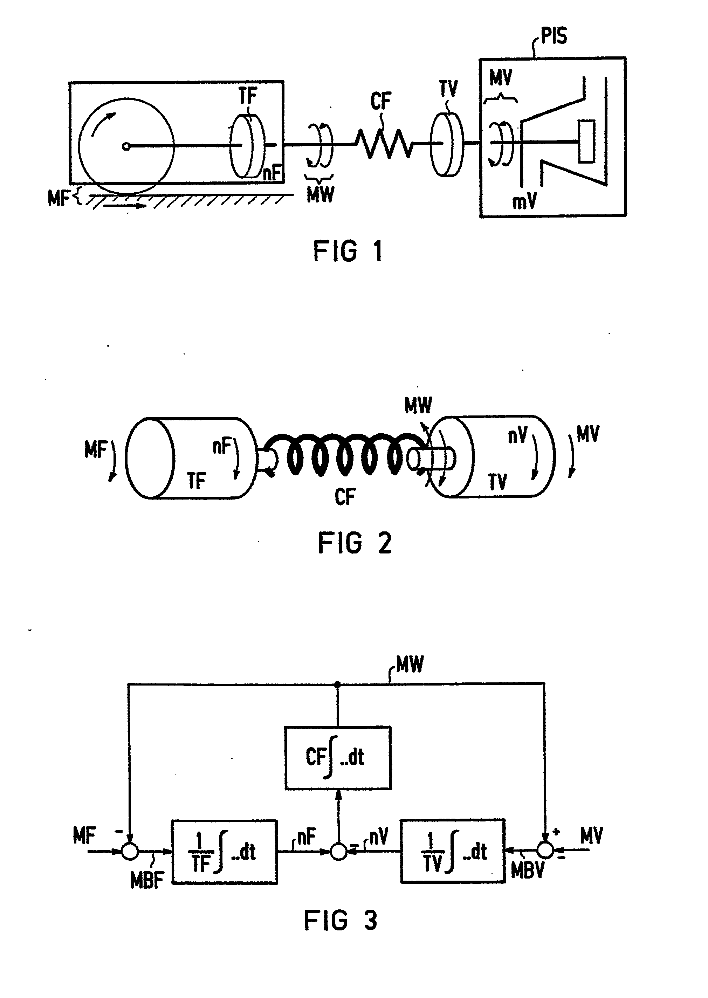

In Figur 1 ist der reale Betrieb bei der Fahrt eines Kraftfahrzeugs mit Brennkraftmaschine dargestellt. Im Brennraum der Brennkraftmaschine PIS, deren bewegliche Teile in Fig. 1 symbolisch als Schwungrad mit dem Trägheitsmoment TV gesondert gezeichnet sind, finden Verbrennungsprozesse statt, die zu einem inneren Drehmoment MV des Drehmomenterzeugers führen, das im folgenden als "Prüflingsmoment" bezeichnet wird. Von der Straße wird über die Räder auf das Fahrzeug ein Drehmoment übertragen, das in Fig. 1 als "Fahrzeugmoment" MF symbolisch dargestellt ist und das zusammen mit anderen Einflüssen (Hangabtrieb, Fahrwiderstand ...) als inneres Moment des Fahrzeugs wirkt. Die Trägheit des Fahrzeugs einschließlich seiner Getriebe sind symbolisch als Schwungscheibe mit dem Fahrzeug-Trägheitsmoment TF dargestellt.

Die Ankopplung zwischen den Trägheitsmomenten TV des Motors und den Trägheitsmomenten TF des Fahrzeugs kann aber nur in einer groben Näherung als vollkommen starr in Form einer steifen Welle angenommen werden. Tatsächlich wirken die inneren Momente von Motor und Fahrzeug nicht nur beschleunigend auf die Trägheitsmomente, sondern sie regen auch innere Schwingungen an. Dies ist in Fig. 1 symbolisch durch eine Feder mit der Federkonstanten CF dargestellt. Dadurch ergibt sich das in Figur 2 gezeigte System zweier elastisch miteinander verkoppelter Massen.

Für die Momentenbilanz des Prüflings gilt, daß das Prüflingsmoment MV teilweise als Prüflings-Beschleunigungsmoment MBV benötigt wird, um die Prüflingsmasse TV auf die Prüflingsdrehzahl nV zu beschleunigen, und teilweise als Wellenmoment MW über die Drehwelle an die elastische Kopplung (Federkonstante Cf) abgegeben wird. Die Feder kann als masselos betrachtet werden, so daß an ihrem motorseitigen Ende das Moment -MW als Reaktionsmoment des Wellenmomentes auf das Fahrzeug-Trägheitsmoment TF wirkt. Die Drehmomenten-Bilanz auf der Fahrzeugseite ergibt dann, daß das Fahrzeug-Trägheitsmoment TF mit dem Beschleunigungsmoment MBF auf die Drehzahl nF beschleunigt wird. Sind beide Drehzahlen gleich, so befindet sich die Feder im eingeschwungenen Zustand; eine Drehzahldifferenz jedoch verwindet die Feder und verändert somit das jeweils zwischen der Feder und einem Trägheitsmoment auftretende Wellenmoment MW.

Dies führt zu der in Figur 3 dargestellten Struktur des Fahrzeug/Kopplung/Motor-Systems, das somit ein Modell des Systems im Realbetrieb darstellt. Im Realbetrieb sind allerdings nicht nur die Fahrzeugdrehzahl nF und das Fahrzeugmoment MF veränderlich, sondern entsprechend dem Beladungszustand des Fahrzeugs, dem Schalt- und Übersetzungsverhältnis von Getriebe und Kopplung, dem Hangabtrieb etc. ist auch das Fahrzeugträgheitsmoment TF veränderlich.

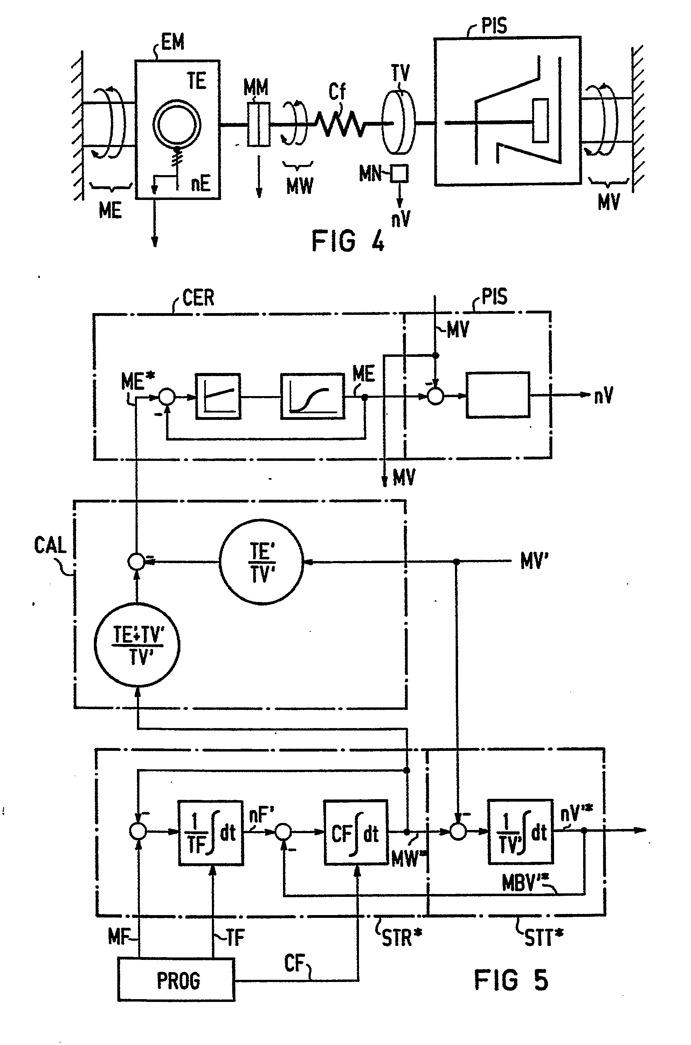

Um nun den Motor bei den der Realfahrt entsprechenden Werten MF, TF zu testen, wird der Prüfling im Motorenprüfstand mit einer Belastungsmaschine gekoppelt, deren Aufgabe es ist, der Drehwelle das zum Realbetrieb gehörende Wellenmoment MW einzuprägen. In Fig. 4 ist ein derartiger Prüfstand gezeigt, bei dem das Fahrzeug nunmehr durch eine Belastungsmaschine mit regelbarem inneren Moment, insbesondere einem elektrischen Antrieb EM mit dem Antriebs-Trägheitsmoment TE und dem meß- und steuerbaren elektrischen Moment ME, gekoppelt ist. Während das Wellenmoment MW, dessen Einprägung das Kernstück der Prüfmethode darstellt, mittels einer Kraftmeßdose MM oder einem anderen Drehmomentaufnehmer an der Welle zwischen Belastungsmaschine EM und Prüfling PIS gemessen werden kann, tritt das innere Moment der Belastungsmaschine zwischen dem Fundament und den Halterungen der Maschine auf und könnte dort mechanisch gemessen werden. Allerdings ist es wesentlich einfacher und hinreichend genau, dieses Moment als elektrisches Moment ME aus den Istwerten (oder Sollwerten) von Strom und Spannung der elektrischen Belastungsmaschine zu errechnen. Die Prüflingsdrehzahl nV kann durch einen Drehzahlmesser MN erfaßt werden, schwierig ist jedoch die Bestimmung des inneren Moments MV des Prüflings. Dieses Prüflingsmoment MV tritt ebenfalls zwischen dem Fundament und den Halterungen des Prüflings auf, es dort jedoch mit einer auch für dynamische Vorgänge hinreichenden Genauigkeit mechanisch zu messen, ist mit einem vertretbaren Aufwand praktisch nicht möglich.

Aus der EP-A 162 398 ist eine Schaltung bekannt, die für den eingeschwungenen Zustand der dynamischen Kopplung das Prüflingsmoment MV aus Istwerten des Wellenmoments MW und des elektrischen Moments ME zu errechnen gestattet. Dort ist auch eine Methode angegeben, durch Abgleich von Parametern das Trägheitsmomentenverhältnis g = TV/TE zu ermitteln.

Voraussetzung dieser bekannten Methode zur Ermittlung des Prüflingsmomentes MV ist, daß der Prüfstand insofern als starres System betrachtet werden kann, als Gleichlauf zwischen Belastungsmaschine und Prüfling, d.h. Gleichheit der Drehzahl nE der Belastungsmaschine und der Prüflingsdrehzahl nV angenommen werden kann. Dies entspricht einer starren Verbindung (CF→∞)zwischen den Trägheitsmomenten TE und TV. Allerdings stellt die Kraftmeßdose MM ihrerseits bereits eine elastische Verbindung dar, bei welcher Eigenschwindung der Welle im Bereich von 50 - 70 Hz auftreten. Diese Eigenfrequenzen sind zwar so hoch, daß sie das Verhalten des Prüflings kaum stören und sich im tatsächlichen Wert MV des Prüflingsmomentes praktisch nicht bemerkbar machen, sie treten jedoch als Oberschwingungen im Meßwert des Wellenmomentes MW auf und können daher den aus den Istwerten von ME und MW errechneten Ersatz-Istwert MV' des Prüflingsmomentes stören. Daher ist in der bekannten Vorrichtung an den Drehmomentaufnehmer MM ein entsprechendes Übertragungsglied zur Kompensation dieser Oberschwingungen vorgesehen.

Das Trägheitsmoment TE der Belastungsmaschine des Prüfstandes ist in der Regel konstant und sehr unterschiedlich vom Trägheitsmoment TF des Fahrzeugs. Damit das von der Belastungsmaschine erzeugte Wellenmoment MW im Prüfstand der Figur 4 gleich dem vom Fahrzeug nach Fig. 1 erzeugten Wellenmoment MW ist, muß das elektrische Moment ME vom Fahrzeugmoment MF ebenfalls abweichen. Gemäß der EP-A 98 570 kann der Sollwert des elektrischen Momentes ME aus den Fahrzeugparametern MF und TF, den im Prüfstand vorhandenen Trägheitsmoment TV und TE sowie einem Momentanwert für das Wellenmoment MW im Prüfstand errechnet werden. Auch hierbei ist ein "statischer Zustand" mit nF = nV im Realbetrieb und nE = nV im Prüfstand vorausgesetzt.

In der DE-A 34 28 755 ist auf die Voraussetzung nF = nV verzichtet und für den Realbetrieb eine endliche Federkonstante CF angenommen. Im Realbetrieb soll also das Wellenmoment MW elastische Schwingungen enthalten, die daher dem Prüfling im Prüfstand ebenfalls eingeprägt werden müssen. Wie dabei aus den Parametern MF und TF des Realbetriebes der Sollwert ME* für das elektrische Moment der Belastungsmaschine errechnet wird, zeigt Fig. 5.

Einem Fahrprogramm-Geber PROG sind dabei die einem programmierten Fahrablauf entsprechenden, zeitlich veränderlichen Parameter MF, TF und CF entnommen und einem elektronischen Rechner eingegeben, der als "Sollwertmodell" die Struktur der Anordnung nach Fig. 1 (Realbetrieb) nachbildet. Dieses Modell stellt lediglich eine andere Darstellung der Struktur nach Fig. 3 dar.

Es enthält zunächst ein Modell STR* des Fahrzeugs, das aus MF, TF und einem Modellwert MBV'* den zum Realbetrieb gehörenden Wert MW'* des Wellenmomentes errechnet. Daran schließt sich ein elektronisches Modell STT* an, das aus einem Parameter TV' für das Prüflings-Trägheitsmoment TV und einem Meßwertsignal MV' für das Prüflingsmoment MV eine Modell-Geschwindigkeit nV'* errechnet, die der Drehzahl des Fahrzeugs im Realbetrieb entspricht und auf die die Drehzahl nV des Prüflings im Prüfstand beschleunigt werden muß. Der Wert MW'* enthält somit die gewünschten Schwingungen des Wellenmoments, die im Realbetrieb aufgrund der realen dynamischen Kopplung CF auftreten und die dem tatsächlichen Wellenmoment MW des Prüflings im Prüfstand aufgeprägt werden müßten.

Daraus errechnet ein Führungsgrößenrechner CAL den Sollwert ME*, den die Regelung des elektrischen Antriebs benötigt. Der elektrische Antrieb (einschließlich seiner elektrischen Regelung) CER und der Prüfling PIS ist in Fig. 5 nur symbolisch als Schaltungsblock dargestellt.

Im genannten Stand der Technik ist angenommen, daß das Prüflingsmoment MV mit ausreichender dynamischer Genauigkeit direkt am Prüfling abgenommen und im elektronischen Modell STT* und im Führungsgrößenrechner CAL als Signal MV' verwendet werden kann. Die aus der erwähnten E-A 162 398 bekannte Methode, einen simulierten Wert MV' zu errechnen, setzt voraus, daß nE = nV wenigstens näherungsweise gilt und die dynamische Kopplung über die Federkonstante Cf der Figur 4 das Prüflingsmoment MV im Prüfstand praktisch nicht beeinflußt.

Tatsächlich sind jedoch die Vorgänge, die von der Krafterzeugung im Inneren des Kolbens bis zur Übertragung des Wellenmoments auf die Belastungsmaschine führen, äußerst verwickelter Natur und stellen eine auch im Prüfbetrieb vorhandene elastische Kopplung dar. Dadurch wird das bekannte Verfahren zur Ermittlung eines simulierten Wertes MV' unbrauchbar.

Es ist daher zunächst Aufgabe der Erfindung, eine Vorrichtung und ein Verfahren anzugeben, die bei dynamischen Zuständen im Prüfstand (nE nV) einen simulierten Wert für das innere Moment des Prüflings zu bestimmen gestattet. Diese Aufgabe wird gelöst durch einen elektronischen Beobachter mit den Merkmalen des Anspruchs 1 und ein Verfahren mit den Merkmalen des Anspruchs 8.

Damit wird es auch möglich, die weiterführende Aufgabe zu lösen, nämlich einen Drehmomenterzeuger, dessen inneres Moment elastisch an eine Drehwelle gekoppelt ist, zu prüfen, wobei ihm ein vorbestimmtes Wellenmoment einzuprägen ist. Gemäß der Erfindung geschieht dies mit einem Verfahren mit den Merkmalen des Anspruchs 12.

Insbesondere ermöglicht die Erfindung auch, über die Steuerung der Belastungsmaschine im Prüfbetrieb auftretende Eigenschwingungen zu dämpfen.

Vorteilhafte Weiterbildungen der Erfindung sind in den Ansprüchen gekennzeichnet und werden anhand von vier Ausführungsbeispielen und 18 Figuren näher erläutert.

Die Figuren zeigen:

Figur 1 bis 3: die bereits erwähnte Struktur eines Fahrzeugs mit Brennkraftmaschine im realen Fahrbetrieb,

Figur 4 einen bereits erwähnten Prüfstand des Motors,

Figur 5 die Struktur des Prüfstandes und seiner Steuerung nach dem Stand der Technik,

Figur 6 eine symbolische Darstellung des Prüfstandes,

Figur 7 bis Figur 9 die Struktur des Prüfstandes und Ausführungsbeispiele des elektronischen Beobachters,

Figur 10 einen Vektor, der aus Ausgangssignalen des besonders vorteilhaften elektronischen Beobachters nach Fig. 9 gebildet wird,

Figur 11 und Figur 12 einen einem skalaren Meßwert zugeordneten Vektor und dessen Mitsystem-Vektor mit Gegensystem-Vektor,

Figur 13 eine Schaltung zur Ermittlung der im Meßwert des Wellenmomentes enthaltenen Eigenfrequenz,

Figur 14 eine Schaltung zur Bildung eines Dämpfungssignals,

Figur 15 Signale und Schaltung zum Ermitteln des Trägheitsmomenten-Verhältnisses g,

Figur 16 eine weitere, besonders vorteilhafte Ausführungsform des elektronischen Beobachters,

Figur 17 und Figur 18 Ausführungsbeispiele eines Sollwertrechners der Figur 5.

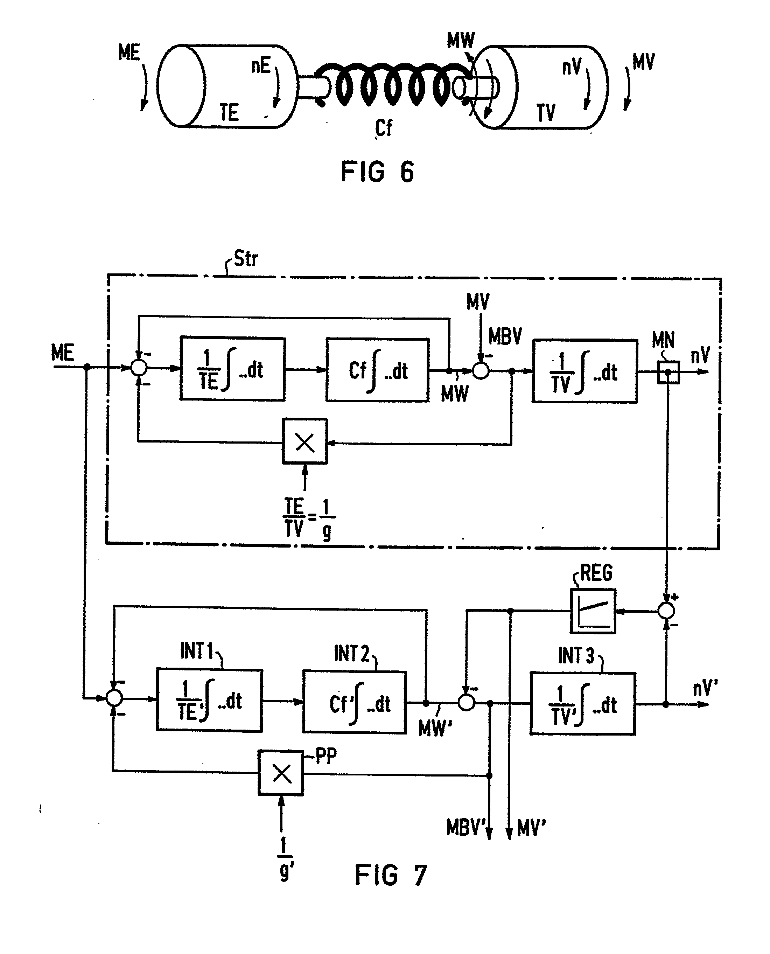

In Figur 6 ist analog zu Fig. 2 eine vereinfachte Darstellung des Prüfstandes gezeigt.

Gegenüber dem System der Fig. 2, das im Prüfstand untersucht werden soll, ist das Trägheitsmoment TV des Prüflings gleich geblieben, jedoch ist die Welle statt mit dem Fahrzeug-Trägheitsmoment TF nunmehr mit dem Trägheitsmoment TE belastet und auch die Ankopplung an die Belastungsmaschine (Federkonstante Cf) ist von der Ankopplung mit dem Fahrzeug im Realbetrieb (Federkonstante CF) in der Regel verschieden. Simuliert werden soll ein Zustand, bei dem der Prüfling die gleiche Drehzahl nV wie im Realbetrieb besitzt und seine Achse mit dem gleichen Wellenmoment MW belastet ist. Zur Einprägung dieses Wellenmomentes muß in der Belastungsmaschine das elektrische Moment ME aufgebracht werden, dessen Sollwert für die Steuerung dieser Maschine benötigt wird, während das im Prüfling durch Steuerung seiner Energiezufuhr aufgebrachte innere Moment MV im Prüfbetrieb dann zwangsläufig dem im Realbetrieb vorliegenden Wert entspricht und ermittelt werden soll.

Für den gesamten Prüfstand ergibt sich eine Struktur, die vollkommen analog ist zu Fig. 3 und dem Sollwertrechner STR* und STT* der Figur 5. In dem Strukturbild Str des Prüfstandes nach Fig. 7 ist lediglich eine andere zeichnerische Darstellung der gleichen Struktur und ein Ersatz der Parameter TF und CF durch die Parameter TE und Cf vorgenommen. Außerdem ist vorgesehen, die Prüflingsdrehzahl nV mittels eines Drehzahlmessers MN zu erfassen. Das Strukturbild Str ist also eine zeichnerische Darstellung des realen Prüfstandes und des Gebildes der Figur 6.

Die weiteren in Fig. 7 dargestellten Elemente bilden ein erstes Ausführungsbeispiel eines elektronischen Beobachters. An einem Beobachterregler REG ist dabei ein simuliertes Prüflingsmoment MV' abgegriffen. Im übrigen enthält dieser elektronischer Beobachter Integratoren INT1, INT2 und INT3 sowie einen Multiplizierer PP mit dem Multiplikationsfaktor $1/g'$, der auf eine später erläuterte Weise auf das Trägheitsmomenten-Verhältnis TE/TV abgestimmt ist. Die Zusammenschaltung dieser Bauteile sowie die verwendeten Rückführungsleitungen entsprechen der Struktur Str des Prüfstandes, so daß am Ausgang des Integrators INT2 ein Modell-Wellenmoment MW', am Eingang des Integrators INT3 ein Modell-Beschleunigungsmoment MBV' und am Ausgang dieses Integrators eine Modelldrehzahl nV' vorliegt. Wird nun die Modelldrehzahl nV' als Istwert auf den am tatsächlichen Prüfstand abgegriffenen Sollwert nV mittels des Reglers REG ausgeregelt, so läuft der elektronische Beobachter bei hinreichender Übereinstimmung der verwendeten Parameter praktisch synchron mit dem tatsächlichen Prüfstand. Die simulierten Momente MV' und MBV' können dann als Ersatz-Istwerte der entsprechenden Drehmomente des Prüflings verwendet werden.

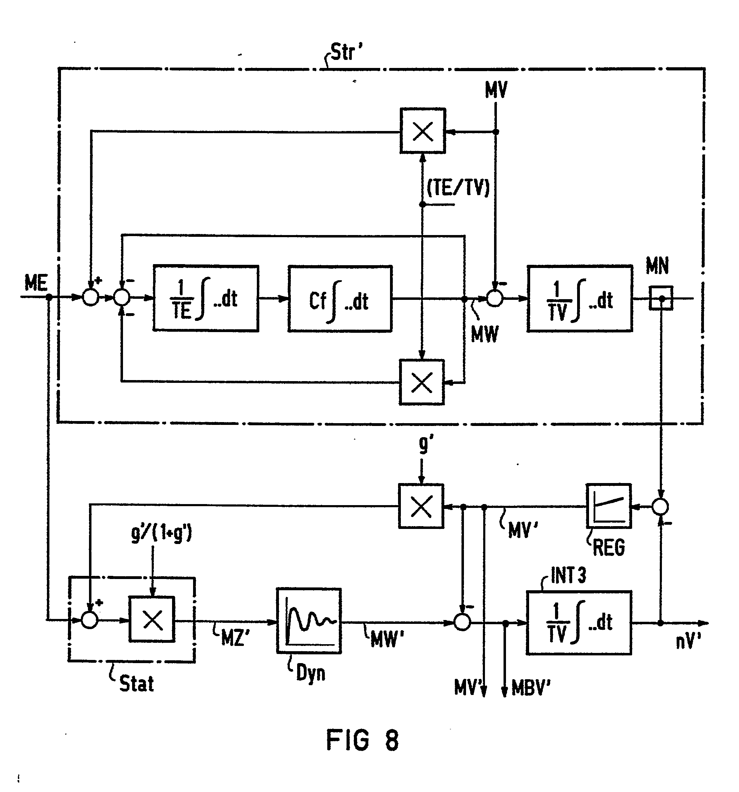

In Figur 8 ist mit Str' die gleiche Struktur des Prüfstandes in einer etwas anderen zeichnerischen Darstellung wiedergegeben. Durch die geänderte Zusammenfassung der Rückführungsleitungen wird deutlich, daß das dynamische Verhalten des Wellenmomentes MW durch unmittelbare Hintereinanderschaltung zweier Integratoren entsteht, während das statische Verhalten, bei dem beide Integranden den Wert Null annehmen, zu einem statischen Wellenmoment MZ gehört:

$$MZ = ME \cdot g/(1+g) + MV/(1+g).$$

Die bei dynamischen Vorgängen angeregten Eigenschwingungen überlagern sich dem statischen Wellenmoment MZ und sind auf die in den Rückkopplungsschleifen liegenden, hintereinandergeschalteten Integratoren zurückzuführen. Ihre Eigenfrequenz ist durch

$$f = \omega/2\pi = \sqrt{Cf(TE+TV)/(TE \cdot TV)}/2\pi$$

gegeben. Die Wirkung der Rückkopplungsschleife ist in dem unter dem Strukturbild Str' des Prüfstands in Fig. 8 dargestellten elektronischen Beobachter durch eine Hintereinanderschaltung eines statischen Modells Stat, das einen Modellwert MZ' für das statische Wellenmoment erzeugt und ein dynamisches Modell Dyn dargestellt, das den Verstärkungsfaktor 1 und die von Modell-Parametern Cf', TE' und TV' abhängige Eigenfrequenz f' besitzt. Dieses dynamische Modell stellt somit eine normierte Form des den Prüfstand repräsentierenden Masse/Feder/Masse-Systems dar. Dieses dynamische Modell Dyn liegt nicht mehr in einer Rückkopplungsschleife, vielmehr ist der auch in diesem Fall am Beobachterregler REG abgegriffene simulierte Wert MV' des Prüflingsmoments einerseits dem statischen Modell Stat, andererseits dem Integrandeneingang des dem dynamischen Modells Dyn nachgeschalteten Integrators INT 3, zugeführt.

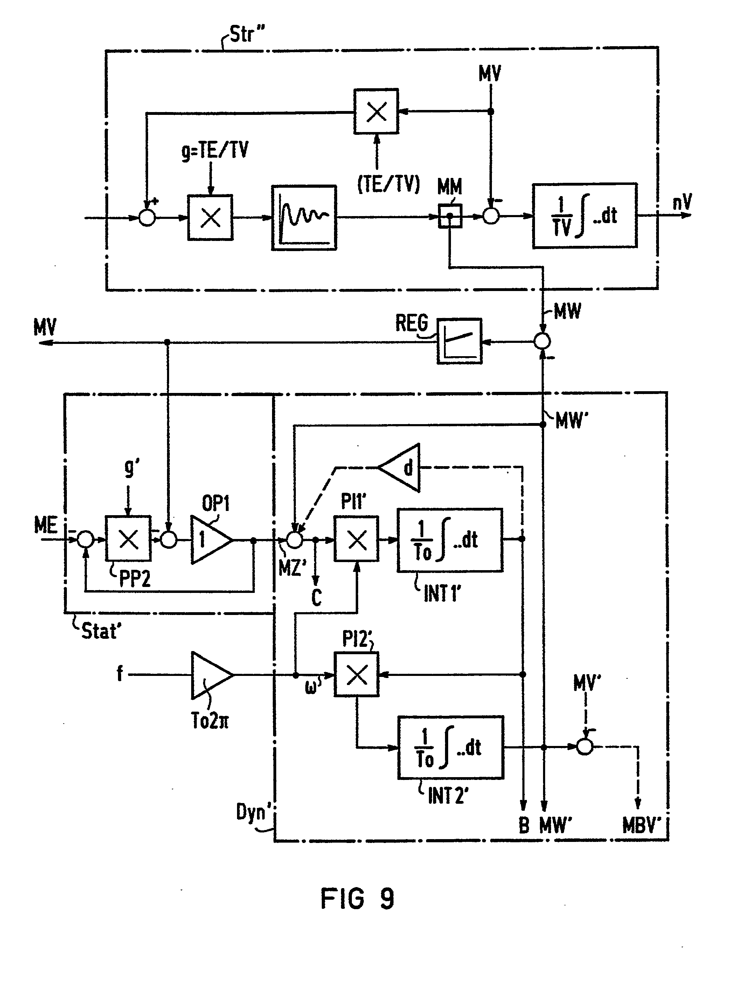

Der Sollwert des Beobachterreglers kann nach Fig. 8 am Drehzahlgeber MN des tatsächlichen Prüfstandes abgegriffen werden, wobei dann als Istwert das Ausgangssignal des Integrators INT3 zu verwenden ist. Auf diesen Integrator kann jedoch verzichtet werden, wenn der Gleichlauf zwischen dem tatsächlichen Prüfstand und dem Beobachter dadurch erreicht wird, daß der Beobachterregler REG nicht die Drehzahl-Differenz ausregelt, sondern die Differenz zwischen dem an einem Drehmomentaufnehmer MM gemessenen tatsächlichen Wellenmoment MW und dem simulierten Wert MW'. Dies ist in Figur 9 dargestellt. Im allgemeinen ist auch das Beschleunigungsmoment MBV nicht von Interesse, so daß das dynamische Modell letztlich nur zur Bildung des Istwertes MW' des Beobachterreglers REG benötigt wird.

Figur 9 zeigt im Teil Stat' die gleiche, dem Modell Stat der Fig. 8 entsprechende Funktion, die jedoch im wesentlichen mit einem Operationsverstärker OP1 (Verstärkungsfaktor 1) und einem Proportionalglied PP2 mit dem Verstärkungsfaktor g' = TV'/TE' auskommt. Entsprechend dem in Fig. 8 gezeigten Aufbau des Beobachters ist das Strukturbild Str'' der Figur 9 auch zur symbolischen Darstellung des Prüfstandes benutzt und das am statischen Modell Stat' abgegriffene statische Modell-Wellenmoment MZ' ist einem dynamischen Modell Dyn' zugeführt, das in besonders vorteilhafter Weise aus zwei hintereinander geschalteten Integratoren INT1' und INT2' aufgebaut ist, die jeweils durch einen vorgeschalteten Multiplizierer PI1', PI2' auf die gleiche, der Eigenfrequenz ω entsprechende Zeitkonstante normiert sind.

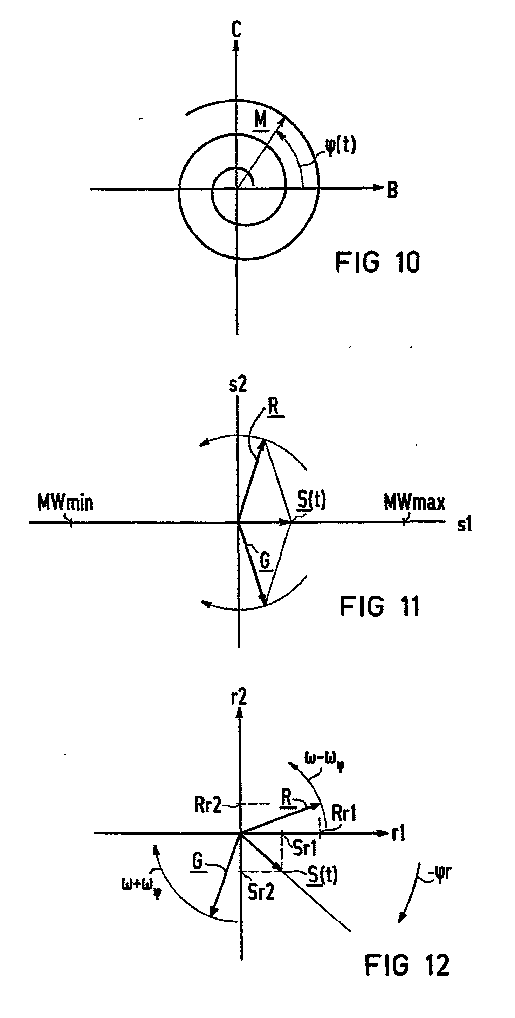

Die Verwendung zweier "gleich großer" Integratoren hat den Vorteil, daß ihre Eingangssignale B, C (genauer: die Eingangssignale der zur Normierung dienenden Multiplikatoren PI1', PI2') bei Eigenschwingungen Wechselspannungssignale darstellen, deren Amplitude etwa gleich ist und der Amplitude des simulierten Wertes MW' entspricht. Das Signal B zeigt gegenüber MW eine Phasenacheilung um etwa 90°, das Signal C dagegen etwa 180°. Die Signale B und C können als Komponenten eines Vektors $\underline{M}$ in einem orthogonalen Koordinatensystem aufgefaßt werden. Figur 10 zeigt die Ortskurve dieses Vektors $\underline{M}$, der somit die dem statischen Wellenmoment MZ überlagerte Eigenschwingung darstellt und in dem Maße auf einer Spiralkurve auf den Nullpunkt zuläuft, indem die Eigenschwingung abklingt.

Aus der Bewegung dieses Vektors $\underline{M}$ kann also einerseits die angeregte Eigenfrequenz des Prüfstands ermittelt werden, andererseits auch die Dämpfung des Systems. (Eine derartige Dämpfung, die bei realen Prüfständen stets auftritt, kann im dynamischen Modell Dyn' der Fig. 9 durch die gestrichelt dargestellte Rückführungsleitung des Integrators INT1' dargestellt werden, um dieses Modell dem tatsächlichen Prüfstand anzugleichen. Da andererseits der Beobachterregler REG ohnehin die Angleichung des simulierten Werts MW' an das tatsächliche Wellenmoment MW erzwingt, kann auf eine derartige, dämpfende Rückführungsleitung mit dem für den jeweiligen Prüfstand charakteristischen Prüfstands-Dämpfungsparameter d verzichtet werden).

Das dynamische Modell erfordert zur Normierung die Frequenz ω der im Wellenmoment enthaltenen Eigenschwingung des Prüfstandes. Zu deren Ermittlung kann vorteilhaft folgendermaßen vorgegangen werden:

Dem skalaren Meßwert MW wird in einem Koordinatensystem der Achsen s1, s2 ein Meßwert-Vektor $\underline{S}(t)$ zugeordnet, dessen Betrag proportional dem skalaren Meßwert und dessen Richtung α konstant vorgegeben ist. Gemäß Fig.11 kann z.B. α = 0 vorgegeben werden, d.h. der Meßwert-Vektor besitzt bezüglich s1, s2 die Komponenten MW und Null. Sein Endpunkt liegt somit auf einer Ortskurve, die auf der Achse s1 liegt und zwischen den positiven und negativen Extremalwerten MWmax und MWmin verläuft.

Außerdem wird durch eine Bezugsfrequenz $\omega_\phi$, die annähernd gleich der angeregten Schwingung des Meßwertes MW ist, ein Winkel $\phi_r = \int \omega_\phi \cdot dt$ bestimmt, durch den die Achsen r1, r2 eines gegenüber den Koordinaten s1, s2 rotierenden Koordinatensystems festgelegt werden.

Durch Transformation des Vektors in das rotierende Koordinatensystem, wie sie z.B. sogenannte "Vektordreher" durchführen, können gemäß Fig. 12 die transformierten Komponenten Sr1, Sr2 des Vektors errechnet werden. Werden diese Komponenten geglättet, so erhält man Komponenten Rr1 und Rr2 eines "Mitsystem-Vektors" $\underline{R}$, der sich im Koordinatensystem r1, r2 mit der Differenzfrequenz $\omega - \omega_\phi$ langsam dreht. Der Vektordifferenz $\underline{S}(t) - \underline{R}$ entspricht ein Gegensystemvektor $\underline{G}$, der sich im rotierenden Koordinatensystem gegenläufig mit der Summenfrequenz $\omega + \omega_\phi$ dreht und bei der Glättung ausgemittelt wird. In Figur 11 sind die beiden Vektoren $\underline{G}$ und $\underline{R}$ nach der Rücktransformation ins Koordinatensystem s1, s2 ebenfalls dargestellt. Man erkennt hierbei die bekannte Zerlegung einer Schwingung in Mitsystem-Schwingung und Gegensystem-Schwingung. Ein im skalaren Meßwert MW enthaltener Gleichspannungswert sowie ein hochfrequentes Rauschen, die bei der Glättung im rotierenden Koordinatensystem ebenfalls weggemittelt werden, sind in den Figuren 11 und 12 der Übersichtlichkeit wegen weggelassen.

Wird also aus dem skalaren Wellenmoment der entsprechende Vektor $\underline{S}$(t) gebildet und in ein geeignetes rotierendes Koordinatensystem transformiert, so gibt die Änderung des Differenzwinkels zwischen dem Mitsystemvektor und einer rotierenden Koordinatenachse die Frequenzdifferenz zwischen der Eigenschwingung des Meßwertes und der die Rotation der Koordinatenachse bestimmenden Bezugsfrequenz $\omega_\phi$ an. Bei bekannter Bezugsfrequenz ist damit auch die Eigenfrequenz des skalaren Meßwertes bestimmt. Der Vorzug dieser Frequenzbestimmung ist, daß eine Glättung erfolgt, ohne daß der geglättete Wert eine Phasenverschiebung gegenüber dem ungeglätteten Wert erhält, und daß die anschließende Bestimmung der Änderungsgeschwindigkeit des Differenzwinkels mit einfachen Mitteln zu einem Differenzwinkel-Geschwindigkeitssignal führt, das gegen Störungen weniger empfindlich ist als die Bestimmung des Differenzwinkels selbst und eine anschließende Frequenzbestimmung durch Differenzieren des Differenzwinkels.

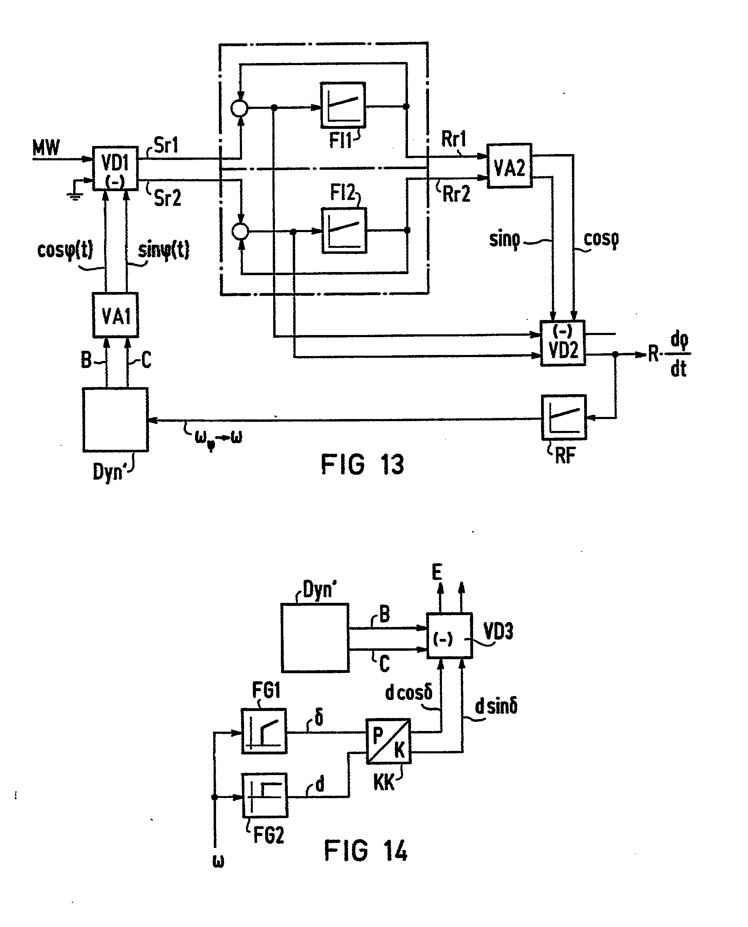

In Figur 13 ist die Transformation des Vektors S(t) mit den Komponenten MW und Null mittels eines Vektordrehers VD1 ausgeführt. Die Glättung der dadurch erhaltenen transformierten Komponenten Sr1 und Sr2 geschieht mittels zweier Filterglieder Fl1, Fl2, die vorzugsweise als Integratoren ausgeführt sind, deren Ausgangssignal negativ auf den Integranden-Eingang rückgeführt sind. Für den dadurch erhaltenen Mitsystem-Vektor $\underline{R}$ ergibt sich der Betrag

$$R = \sqrt{Rr1^2 + Rr2^2}$$

und der Differenzwinkel $\rho$ = arc tan (Rr2/Rr1), und ein Vektoranalysator VA2 berechnet daraus die Winkelfunktionen cos $\rho$ und sin $\rho$. Die Integranden der Integratoren Fl1, Fl2 sind dann gleich den Ableitungen der Komponenten Rr1, Rr2, sie stellen also den zu $\underline{R}$ gehörenden Differentialvektor $\underline{I}$ = d$\underline{R}$/dt dar. Sie werden den Vektorsignaleingängen des Vektordrehers VD2 zugeführt, dessen Winkelsignaleingang an den Ausgang des Vektoranalysators VA2 angeschlossen ist. Der Vektordreher VD2 liefert dann die zum Mitsystem-Vektor parallele Komponente des Differentialvektors, die gleich der Ableitung dR/dt des Mitsystem-Vektorbetrages R wird, während die zum Mitsystemvektor senkrechte Komponente den Wert R.d $\rho$/dt annimmt. Damit ist eine der Differenzwinkel-Geschwindigkeit d$\rho$/dt = $\omega$-$\omega_\phi$ proportionales Signal geschaffen.

Wird nun die Bezugsfrequenz, deren Integral das Signal am Winkelsignaleingang des Vektordrehers VD1 bestimmt, solange variiert bis das Differenzwinkel-Geschwindigkeitssignal den Wert Null angibt, so ist Gleichheit zwischen dieser Bezugsfrequenz und der Eigenschwingung des Meßwerts erreicht.

In Figur 13 ist der Winkelsignaleingang des Vektordrehers VD1 mit dem Ausgang eines Vektoranalysators VA1 verbunden, dessen Eingang die Signale B und C des dynamischen Modells Dyn' zugeführt sind. Der Vektoranalysator VA1 liefert also die Größen cos $\phi$(t) und sin $\phi$(t), die die Richtung des Vektors $\underline{M}$ der Fig. 10 angeben. Der Meßwert-Vektor $\underline{S}$(t) wird also in ein mit dem Vektor $\underline{M}$ rotierendes Koordinatensystem transformiert. Der Vektordreher VD2 gestattet dann, die Frequenzdifferenz zwischen der angeregten Eigenfrequenz des Wellenmoments MW und der Frequenz $\omega_\phi$ = d$\phi$/dt zu erfassen und die Frequenz des dynamischen Modells dieser angeregten Eigenfrequenz nachzuführen. Dieser Frequenzabgleich kann z.B. mittels eines Frequenzreglers RF erfolgen, der durch Veränderung seines Ausgangssignals die zur Normierung der Integratoren des dynamischen Modells erforderliche Frequenz solange verändert, bis die Differenzfrequenz $\omega_\phi$-$\omega$ verschwindet und das dynamische Modell auf die Eigenfrequenz des Meßwertes MW abgeglichen ist.

Letztlich wird also aus den Integranden der beiden Integratoren und dem Meßwert des Wellenmomentes eine Eigenfrequenz bestimmt und die Zeitkonstante jedes Integrators wird auf diese Eigenfrequenz abgestimmt.

Das dynamische Modell gestattet ferner, durch eine Drehstreckung mit dem Proportionalitätsfaktor D und dem Drehwinkel $\delta$ ein Signal zu erzeugen, das gegenüber der Eigenschwingung von MW eine einstellbare Amplitude und Phasenverschiebung aufweist. Ein derartiges Signal ist zur Bedämpfung der Eigenschwingung von elektrischem Antrieb und Prüfling vorteilhaft und muß nicht nur dieser Eigenschwingung um 90° voreilen (wie dies für eine optimale Dämpfung erforderlich ist), sondern auch die unvermeidliche Verzögerung ausgleichen, die in der Belastungsmaschine beim Einprägen des elektrischen Momentes ME entsteht.

Da diese Verzögerung von der jeweiligen Eigenfrequenz des schwingungsfähigen Systems abhängt, ist gemäß Fig. 14 vorgesehen, durch Kennliniengliederr FG1 und FG2 zu der jeweiligen Eigenfrequenz $\omega$ einen optimal gewählten Dämpfungswinkel $\delta$ und Dämpfungsfaktor D vorzugeben. Ein polar/kartesischer Koordinatenwandler KK errechnet daraus die Komponenten D·cos$\delta$ und D·sin$\delta$ eines Drehstreckungsvektors, der mittels des Vektordrehers VD3 auf den am dynamischen Modell abgegriffenen Vektor $\underline{M}$ angewendet wird. Dadurch wird dessen Komponente B, die der Eigenschwingung des Meßwerts MW an sich um 90° voreilt, um den Phasenwinkel $\delta$ weiter verschoben und mit dem Dämpfungsfaktor d multipliziert. Dadurch entsteht das Dämpfungssignal E.

Die dynamische Genauigkeit des elektronischen Beobachters ist schließlich davon abhängig, wie genau der Parameterwert g' für das Trägheitsmomentenverhältnis TV/TE bestimmbar ist. Hierzu kann auf den simulierten Momentenwert MV' die bereits in E-A-162 398 beschriebene Identifizierung angewendet werden.

Für das reale Wellenmoment und dessen simulierten Wert gelten nämlich die Beziehungen

$$MW = ME \cdot g/(1+g) + MV/(1+g)$$
$$MW' = ME \cdot g'/(1+g') + MV'/(1+g').$$

Da der Beobachterregler $MW = MW'$ erzwingt, folgt daraus $MV' = ME (g-g') + MV (1+g')/1+g$.

Im abgeglichenen Zustand, d.h. $g = g'$, gilt $MV' = MV$ und es tritt kein Anteil auf, der zu ME proportional ist; umgekehrt bewirkt ein mangelnder Abgleich (g' g), daß zwischen Änderungen des elektrischen Momentes ME und Änderungen des simulierten Signals MV' eine zusätzliche Korrelation auftritt. Wird daher z.B. im Leerlauf oder im Stillstand (MV≈o) ein Korrelationssignal y gebildet, so kann der Parameter g' an einem Potentiometer Pot solange variiert werden, bis bei Schwankungen im Istwert oder Sollwert das Korrelationssignal minimal wird.

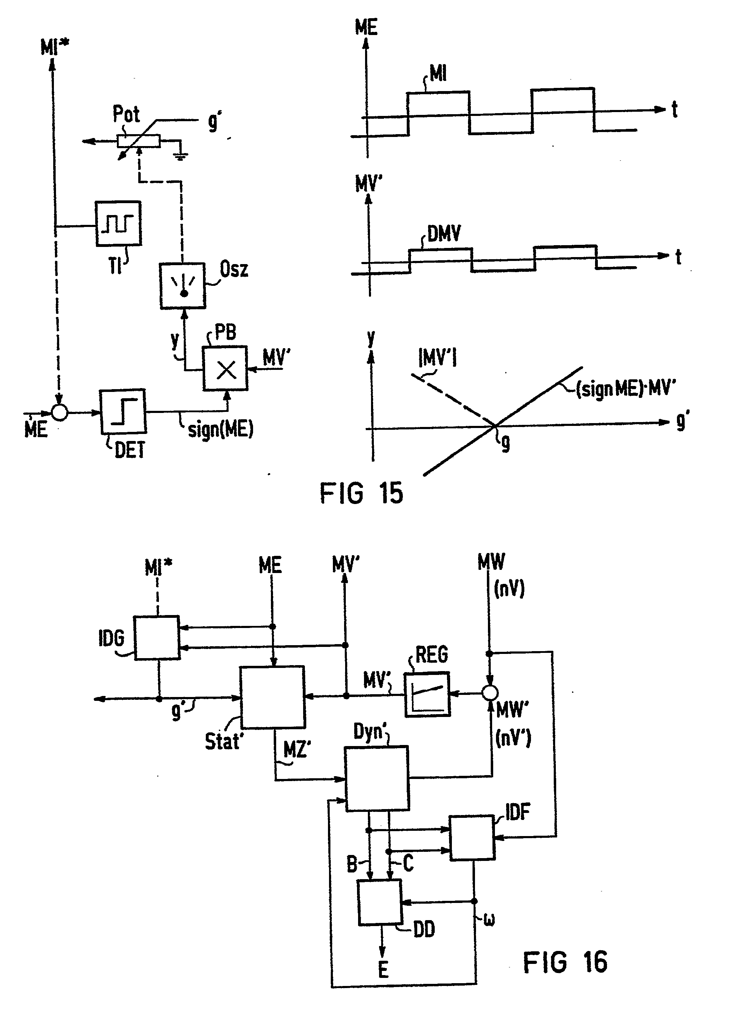

Treten z.B. im elektrischen Moment ME Störimpulse MI auf, so zeigen sich im Signal MV' für g'>g gleichphasige Impulse (Fig. 15) und für g'<g gegenphasige Impulse. Beobachtet man für das Signal y = |MV'| an einem Oszillographen Osz die entsprechenden Oszillationen DMV, so kann am Potentiometer Pot der Abgleich von Hand ausgeführt werden.

Der Abgleich läßt sich vorteilhaft automatisieren, wenn mittels eines Polaritätsdetektors DET und eines Multiplizierers PB als Korrelationssignal y = sign(ME).MV' gebildet wird. Das ergibt die in Figur 15 ebenfalls gezeigte Abhängigkeit zwischen y und g', die eine Regelung mit eindeutigem Regelsinn ermöglicht, also den Einsatz eines automatischen Reglers, an dessen Ausgang g' abgegriffen werden kann.

Vorteilhaft werden von einem Identifikationstaktgeber TI die Störimpulse MI* als Zusatz-Sollwerte für das elektrische Moment ME der Belastungsmaschine erzeugt. Die dadurch erzwungenen Schwankungen MI des Momentes ME können am Istwert oder auch am Sollwert (insbesondere am Ausgang des Taktgebers TI, vgl. Fig. 15) detektiert werden.

Die entsprechenden, mit MI synchronen Schwankungen DMV des simulierten Wertes MV' werden dann durch Verändern des Parameters g' verändert, der im statischen Modell Stat' benutzt wird. Dazu kann anstelle des Handabgleichs mit Oszillograph und Potentiometer auch ein automatischer Regler mit integralem Verhalten benutzt werden. Ein einmalig vorgenommener Parameterabgleich kann dann für den ganzen Prüfbetrieb beibehalten und der Taktgeber TI abgeschaltet werden.

Die Kombination des erfindungsgemäßen elektronischen Beobachters mit einem statischen und einem dynamischen Modell (z.B. Stat' und Dyn' der Fig. 9) mit dem Beobachterregler REG mit der in Fig. 15 gezeigten Anordnung IDG zur Identifikation des Parameters g', der in Fig. 13 gezeigten Anordnung IDF zur Identifikation der Eigenfrequenz und der in Fig. 14 gezeigten Schaltung DD zur Bildung eines Dämpfungssignals führt zu der in Fig. 16 gezeigten Gesamtanordnung, die mit dem Meßwert ME des elektrischen Moments der Belastungsmaschine und dem Meßwert MW des Drehmomentaufnehmers (bzw. entsprechend Fig. 7 oder 8 dem Drehzahlistwert nV und einem entsprechenden simulierten Wert nV', falls das dynamische Modell Dyn' den Integrator INT3 enthält) auskommt. An diesem Beobachter können das simulierte Prüflingsmoment MV', der abgeglichene Parameter g', ein optimales Dämpfungssignal E und ggf. der Identifikationstakt MI* abgegriffen werden.

Sofern die elektrische Belastungsmaschine auch dynamisch hinreichend genau auf den Momentensollwert ME* eingeregelt wird (z.B. bei einer feldorientiert geregelten, umrichtergespeisten Drehfeldmaschine), kann als Meßwert ME auch direkt der Sollwert ME* für die Zwecke der Simulation und Prüfung des Prüflings benutzt werden.

An sich steht gemäß der Erfindung also der simulierte Wert MV' zur Verfügung, der in Fig. 5 im Sollwertmodell zur Bildung von MW'* und im Führungsgrößenrechner CAL benötigt wird, um den Sollwert ME* des elektrischen Moments zu bilden.

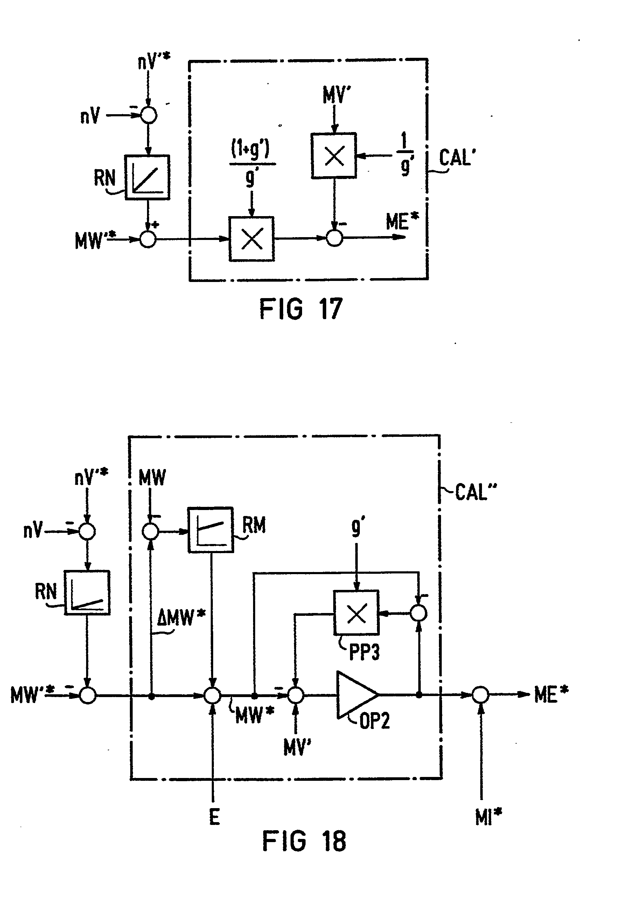

Um im Prüfstand dem Prüfling jedoch einerseits die dem Prüfprogramm entsprechenden dynamischen Änderungen von MW'* einzuprägen, andererseits zumindest einen langsamen Angleich der Prüflingsdrehzahl nV an die dem Prüfprogramm entsprechende Solldrehzahl nV'* zu erreichen, wird die Differenz nV'* - nV einem langsamen Drehzahlregler RN (z.B. einem integrierenden Regler mit langer Integrationszeit) zugeführt, dessen Ausgangssignal dem Sollwert MW'* aufgeschaltet wird. Im Führungsgrössenrechner der Fig. 17 ist daher der der Fig. 5 entsprechende Rechnerteil CAL' um diesen langsamen Drehzahlregler ergänzt.

Die gleiche Ergänzung mit dem Regler RN zeigt auch die Fig.18, wobei am Ausgang eines Rechnerteils CAL'' zur Bildung des elektrischen Momenten-Sollwerts zusätzlich für die Zwecke der g'-Identifizierung der Identifikationstakt MI* aufgeschaltet ist.

Die dem Rechnerteil CAL' der Fig. 17 zugrunde liegende Beziehung

$$ME^* = MW'^* (1+g')/g' - MV'/g'$$

kann umgeformt werden zu

$$g' \cdot (ME^* - MW'^*) - MW'^* + MV' = 0.$$

Sie läßt sich somit durch einen Operationsverstärker OP2 mit maximaler Verstärkung und einen Multiplizierer PP3 darstellen wie das im Teil CAL'' der Fig. 18 gezeigt ist.

Da es das Ziel des Prüfstandes ist, die prüfstandseigenen Oberschwingungen zu unterdrücken und dem Prüfling die dynamischen Änderungen des Sollwerts MW'* einzuprägen, ist ferner noch eine sehr schnell wirkende Drehmomentregelung am Eingang des Rechenteils CAL'' vorgesehen. Zu diesem Zweck wird dem Wellenmoment-Sollwert noch ein Korrektursollwert ΔMW* aufgeschaltet, der an einem Momentenregler RM für den Wellenmoment-Istwert MW abgegriffen ist. Vorteilhaft wird an dieser Stelle auch das Dämpfungssignal E aufgeschaltet, mit dem die Eigenschwingungen des Prüfstands bedämpft werden können. Der daraus resultierende Wellenmoment-Sollwert MW* tritt somit nach Fig. 18 an die Stelle des Sollwertes MW'*, der nach der bereits dem Führungsgrößenrechner CAL der Fig. 5 zugrunde liegenden Beziehungen mit MV' und g' zum elektrischen Momentensollwert verarbeitet wird. Dabei kann es vorteilhaft sein, dem simulierten Wert MV' des Prüflingsmomentes am entsprechenden Eingang der Baugruppe CAL'' ein Filter vorzuschalten, um durch eine definierte Phasenverschiebung die Verzögerung, die bei der Bildung des MV'-Wertes im Prüfstand und im elektrischen Beobachter entstehen, zu kompensieren.

Auf diese Weise ist es möglich, einen Prüfling in einem Prüfstand, der als schwingungsfähiges System selbst zu Eigenschwingungen neigt, unter Bedingungen zu testen, bei denen der Prüfling praktisch nur die im Realbetrieb auftretenden Bewegungen ausführt.

## Patentansprüche

1. Elektronischer Beobachter für einen Drehmomenterzeuger, dessen inneres Moment mittels einer Drehwelle elastisch an das Drehmoment einer Belastungsmaschine übertragen wird, mit
   a) einem Beobachterregler (REG), an dessen Ausgang ein simulierter Wert (MV') des inneren Drehmomentes abgegriffen ist,
   b) einem mindestens zwei Integratoren (INT1, INT2) enthaltenden Rechenmodell, dem der simulierte Wert und ein Meßwert (ME) des Momentes der Belastungsmaschine zugeführt wird und an dessen Ausgang ein simulierter Wert (MW') des auf die Welle wirkenden Drehmomentes ("simuliertes Wellenmoment") abgegriffen ist, und
   c) Mitteln, um dem Istwerteingang des Beobachterreglers (REG) das simulierte Wellenmoment oder eine daraus errechnete simulierte Drehzahl (nV') und dem Sollwerteingang des Beobachterreglers einen entsprechenden, am Drehmomenterzeuger abgegriffenen Meßwert (MW bzw. nV) zuzuführen.

2. Elektronischer Beobachter nach Anspruch 1, **dadurch gekennzeichnet**, daß das Rechenmodell ein statisches Modell (Stat') zur algebraischen Berechnung eines im stationären Betrieb dem Wellenmoment entsprechendes statitischen Wellenmomentes (MZ') enthält, und daß in Reihe mit dem statischen Modell ein auf die angeregte Eigenfrequenz des Wellenmoments abgestimmtes, die beiden Integratoren enthaltendes dynamisches Modell (Dyn') nachgeschaltet ist.

3. Elektronischer Beobachter nach Anspruch 2, **dadurch gekennzeichnet**, daß die beiden Integratoren (INT1', INT2') hintereinander geschaltet und jeweils einzeln auf die Frequenz ($\omega$) der angeregten Eigenschwingungen normiert sind.

4. Elektronischer Beobachter nach Anspruch 3, **gekennzeichnet durch** eine Identifikationsschaltung, der die Eingangssignale (BC) der beiden Integratoren und der Meßwert zugeführt sind, mit einem Ausgang zum Abgriff eines Frequenzdifferenzsignals (R . dp/dt), und Mittel (RF), durch die die Integrationszeit der Integratoren bis zum Verschwinden des Frequenzdifferenzsignals verändert werden. (Fig. 13)

5. Elektronischer Beobachter nach Anspruch 3, **gekennzeichnet durch** eine Einrichtung zur Phasenverschiebung (VD3), mit der das Eingangssignal eines der im dynamischen Modell enthaltenen Integratoren um einen von der Eigenfrequenz abhängigen Phasenwinkel ($\delta$) verschoben und mit einem frequenzabhängigen Faktor (D) multipliziert wird.

6. Elektronischer Beobachter nach Anspruch 1, **gekennzeichnet durch** eine Einrichtung zur Identifikation des Trägheitsmomenten-Verhältnisses von Drehmomenterzeuger und Belastungsmaschine, mit einem Eingang für den simulierten Wert (MV') des inneren Momentes, einem Ausgang für einen dem Rechenmodell zugeführten Parameterwert (g') des Trägheitsmomenten-Verhältnisses, und Mitteln, mit denen der Parameterwert variiert wird, bis bei Schwankungen des Moments der Antriebsmaschine auftretende Schwankungen des simulierten Wertes minimal werden.

7. Elektronischer Beobachter nach Anspruch 1, **gekennzeichnet durch** eine Gleichrichter-Anordnung, die durch Bewertung der Schwankungen des simulierten Wertes mit der Polarität der Schwankungen des Momentes der Antriebswelle ein unipolares Regelsignal für die Variationen des Parameterwertes liefert.

8. Verfahren zur Bestimmung des inneren Momentes eines Drehmomenterzeugers mit folgenden Merkmalen:
   a) Der Drehmomenterzeuger (PIS) wird über eine Welle elastisch an eine Belastungsmaschine gekoppelt, deren inneres Moment bestimmt wird,
   b) aus dem inneren Moment (ME) der Belastungsmaschine und einem simulierten Wert (MV') für das innere Moment des Drehmomenterzeugers wird elektronisch ein simulierter Ersatzwert (MW') für das über die Welle ausgetauschte Drehmoment, das sogenannte "simulierte Wellenmoment" gebildet,
   c) der Ersatzwert (MW') oder eine daraus elektronisch nachgebildete Drehzahl (nV') des Drehmomenterzeugers wird als Istwert mit einem am Drehmomenterzeuger abgegriffenen, entsprechenden Meßwert (MW bzw. nV) als Sollwert verglichen und das Vergleichsergebnis wird durch Veränderung des simulierten Wertes für das innere Moment des Drehmomenterzeugers ausgeregelt und
   d) der simulierte Wert des inneren Moments des Drehmomenterzeugers wird abgegriffen.

9. Verfahren nach Anspruch 8, **dadurch gekennzeichnet**, daß zur elektronischen Simulierung des Wellenmomentes zunächst in einem algebraischen Rechenmodell (Stat') aus dem Meßwert (ME) des Moments der Belastungsmaschine und dem simulierten Wert (MV') ein statischer Wert (MZ') des simulierten Wellenmomentes errechnet wird, aus dem durch zweifache Integration das simulierte Wellenmoment (MW') gebildet wird.

10. Verfahren nach Anspruch 9, **dadurch gekennzeichnet**, daß aus den Integranden (B,C) der zweifachen Integration und dem Meßwert (MW) des Wellenmoments eine Eigenfrequenz ($\omega$) bestimmt und die Zeitkonstanten jeder Integration auf die Eigenfrequenz abgestimmt werden.

11. Verfahren nach Anspruch 8, **dadurch gekennzeichnet**, daß dem Moment der Belastungsmaschine Schwankungen (MI) eingeprägt werden, daß zu diesen Schwankungen synchrone Schwankungen (DMV) des simulierten Wertes des inneren Momentes erfaßt werden und daß durch Verändern eines bei der Simulation des statischen Wellenmomentes verwendeten Parameters (g') die erfaßten Schwankungen (DMV) des simulierten Wertes (MV') minimalisiert werden.

12. Verfahren zum Prüfen eines Drehmomenterzeugers mit folgenden Merkmalen:

a) eine Drehwelle des Drehmomenterzeugers wird in einem Prüfstand an eine Belastungsmaschine angeschlossen, deren inneres Moment (ME) bestimmt wird,

b) an einem Regler (REG, Fig. 16) wird ein simulierter Wert (MV') für das innere Moment des Drehmomenterzeugers abgegriffen,

c) aus dem simulierten Wert (MV') des inneren Momentes des Drehmomenterzeugers und aus dem inneren Moment (ME) der Belastungsmaschine wird in einem elektronischen Modell (Stat' + Dyn', Fig. 16), das eine elastische Kopplung zwischen Drehmomenterzeuger und Belastungsmaschine nachbildet, ein simuliertes Wellenmoment (MW') für das im Prüfstand über die Welle zwischen Belastungsmaschine und Drehmomenterzeuger ausgetauschte Drehmoment gebildet,

d) das simulierte Wellenmoment (MW') oder eine simulierte Drehmomenterzeuger-Drehzahl (nV'), die aus dem simulierten Wert des inneren Momentes des Drehmomenterzeugers und dem simulierten Wellenmoment gebildet wird, wird als Istwert und ein entsprechender, im Prüfstand gemessener Wert als Sollwert dem Regler zugeführt,

e) einem Prüfprogramm (PROG) werden Daten (MF,TF,CF) einer Last, die in einem zu prüfenden Realbetrieb an den Drehmomenterzeuger angeschlossen ist, entnommen und es wird ein Schwingungen enthaltender Modell-Sollwert (MW'*) und aus dem Modell-Sollwert und dem simulierten Wert (MV') des inneren Momentes des Drehmoment-Erzeugers wird ein Sollwert (nV'*) für die Drehzahl des Drehmomenterzeugers gebildet,

f) aus der Solldrehzahl und der im Prüfstand gemessenen Drehzahl (nV) des Drehmomenterzeugers bildet ein weiterer Regler (RN, Fig. 18), dessen Zeitkonstante groß ist gegenüber der Zeitkonstante der Eigenschwingungen des Prüfstands, einen Wellenmoment-Zusatzsollwert ($\Delta$MW*),

g) der Modell-Sollwert und der Zusatzsollwert werden in einen Sollwert (ME*, Fig. 18) für das innere Moment der Belastungsmaschine umgerechnet,

h) das innere Moment der Belastungsmaschine wird auf den errechneten Sollwert eingeregelt.

13. Verfahren nach Anspruch 12, **dadurch gekennzeichnet**, daß der Sollwert (MW'*) und ein Meßwert (MW) des Wellenmomentes einem Wellenmoment-Regler (RM) zugeführt sind, dessen Ausgangssignal als weiterer Zusatz-Sollwert dem simulierten Wellenmoment-Sollwert aufgeschaltet wird.

14. Verfahren nach Anspruch 12, **dadurch gekennzeichnet**, daß aus einem Meßwert (MW) für das Wellenmoment des Prüfstands die Frequenz ($\omega$) einer im Prüfstand angeregten elastischen Schwingung ermittelt und das elektronische Modell (Dyn') auf diese Frequenz abgestimmt wird.

15. Verfahren nach Anspruch 14, **dadurch gekennzeichnet**, daß in Abhängigkeit der Frequenz ( )der elastischen Schwingung ein phasenverschobenes Dämpfungssignal gebildet (E) und dem simulierten Wellenmoment-Sollwert aufgeschaltet wird.

**Claims**

1. An electronic observer for a torque generator, whose intrinsic moment, by means of a torque shaft, is elastically translated into the torque of a loading machine with

a) an observer controller (REG), at the output of which a simulated value (MV') of the inner torque is picked up,

b) a calculation model containing at least two integrators (INT1, INT2), to which are supplied the simulated value and a measured value (ME) of the moment of the loading machine, and at the output of which a simulated value (MW') of the torque acting on the shaft ("simulated shaft moment") is picked up, and

c) means to supply to the actual-value input of the observer controller (REG) the simulated shaft moment or a simulated rotational speed (nV') calculated from this and to supply to the desired-value input of the observer controller a corresponding measured value (MW or nV) picked up at the torque generator.

2. An electronic observer according to claim 1, characterised in that the calculation model contains a static model (Stat') for algebraic calculation of a static shaft moment (MZ') corresponding in the stationary operation to the shaft moment and in that connected downstream in series with the static model there is a dynamic model (Dyn') tuned to the excited natural frequency of the shaft moment, and containing both integrators.

3. An electronic observer according to claim 2, characterised in that the two integrators (INT1', INT2') are connected behind one another and are respectively standardised individually to the frequency (w) of the excited natural oscillations.

4. An electronic observer according to claim 3, characterised by an identification circuit, to which the input signals (BC) of both integrators and the measured value are supplied, with one output for picking up a frequency differential signal (R.d@/dt), and means (RF) through which the integration time of the integrators is altered until the frequency differential signal disappears.

5. An electronic observer according to claim 3, characterised in that a device for phase displacement (VD3) with which the input signal of one of the integrators contained in the dynamic model is displaced by a phase angle (δ), dependent on the natural frequency and multiplied with a frequencydependent factor (D).

6. An electronic observer according to claim 1, characterised by a device for identification of the moment-of-inertia ratio of the torque generator and loading machine, with one input for the simulated value (MV') of the intrinsic moment, one output for a parameter value (g') of the moment-of-inertia ratio supplied to the calculation model and means with which the parameter value is varied, until variations occurring in the simulated value become minimal with variations of the moment of the drive.

7. An electronic observer according to claim 1, characterised by a rectifier arrangement which, by evaluating the variations of the simulated value with the polarity of the variations of the moment of the drive shaft, delivers a unipolar regulating signal for the variations of the parameter value.

8. A method for determining the intrinsic moment of a torque generator with the following features:

a) the torque generator (PIS) is elastically coupled by way of a shaft to a loading machine, the intrinsic moment of which is fixed,

b) from the intrinsic moment (ME) of the loading machine and a simulated value (MV') for the intrinsic moment of the torque generator a simulated substitute value (MW') is formed electronically for the torque exchanged by way of the shaft, the so-called "simulated shaft moment",

c) the substitute value (MW') or a rotational speed (nV') of the torque generator simulated electronically from this is compared as actual-value with a corresponding measured value (MW or nV) picked up at the torque generator as desired-value, and the comparison result is levelled by alteration of the simulated value for the intrinsic moment of the torque generator and

d) the simulated value of the intrinsic moment of the torque generator is picked up.

9. A method according to claim 8, characterised in that for electronic simulation of the shaft moment a static value (MZ') of the simulated shaft moment is calculated firstly in an algebraic calculation model (Stat') from the measured value (ME) of the moment of the loading machine and the simulated value (MV') from which static value, through double integration, the simulated shaft moment (MW') is formed.

10. A method according to claim 9, characterised in that from the integrators (B, C) of the double integration and the measured value (MW) of the shaft moment a natural frequency (4) is fixed and the time constants of each integration are tuned to the natural frequency.

11. A method according to claim 8, characterised in that variations (MI) are applied to the moment of the loading machine, in that together with these variations synchronous variations (DMV) of the simulated value of the intrinsic moment are measured and in that through alteration of a parameter (g'), used during simulation of the static shaft moment, the measured variations (DMV) of the simulated value (MV') are minimalised.

12. A method for examining a torque generator with the following features:

a) a torque shaft of the torque generator is connected in a test stand to a loading machine, the intrinsic moment (ME) of which is fixed,

b) a simulated value (MV') for the intrinsic moment of the torque generator is picked up at a controller (REG, Fig 16),

c) the one elastic coupling between torque generator and loading machine is simulated from the simulated value (MV') of the intrinsic moment of the torque and from the intrinsic moment (ME) of the loading machine in an electronic model (Stat'+ Dyn'), and a simulated shaft moment (MW') for the torque exchanged in the test stand by way of the shaft between the loading machine and torque generator is formed,

d) the simulated shaft moment (MW') or a simulated torque generator rotational speed (nV'), which is formed from the simulated value of the intrinsic moment of the torque generator and the simulated shaft moment, is supplied as actual-value and a corresponding value measured in the test stand is supplied as desired-value to the controller,

e) data (MF, TF, CF) of a load, which is connected to the torque generator in a real operation to be examined, are taken from the test program (PROG) and a model desired-value (MW'*) containing variations is formed and from the model desired-value and the simulated value (MV') of the intrinsic moment of the torque generator a desired-value (nV'*) is formed for the rotational speed of the torque generator,

f) from the desired rotational speed and the rotational speed (nV) of the torque generator measured in the test stand a further controller (RN), the time constant of which is large relative to the time constant of the actual oscillations of the test stand, forms an additional shaft moment desired value (MW*),

g) the model desired-value and the additional desired-value are converted into a desired-value (ME*) for the intrinsic moment of the loading machine

h) the intrinsic moment of the loading machine is adjusted to the calculated desired-value.

13. A method according to claim 12, characterised in that the desired-value (MW'*) and a measured value (MW) of the shaft moment are supplied to a shaft moment controller (RM), the output signal of which is connected as further additional desired-value to the simulated shaft moment desired-value.

14. A method according to claim 12, characterised in that from one measured value (MW) for the shaft moment of the test stand the frequency (w) of an elastic oscillation excited in the test stand is determined, and the electronic model (Dyn') is tuned to this frequency.

15. A method according to claim 14, characterised in that in dependence on the frequency () of the elastic oscillation a phase-displaced attenuating signal is formed (E) and applied to the simulated shaft moment desired-value.

**Revendications**

1. Dispositif de surveillance électronique pour un générateur de couple, dont le couple interne est couplé élastiquement, par l'intermédiaire d'un arbre de rotation, au couple d'une machine de charge, comportant

a) un régulateur (REG), sur la sortie duquel est prélevée une valeur simulée (MV') du couple interne,

b) un modèle de calcul, qui contient au moins deux intégrateurs (INT1, INT2) et auquel sont envoyées la valeur simulée et une valeur de mesure (ME) du couple de la machine de charge et à la sortie duquel est prélevée une valeur simulée (MW') du couple agissant sur l'arbre ("couple simulé de l'arbre"), et

c) des moyens pour envoyer, à l'entrée de la valeur réelle du régulateur (REG) du dispositif de surveillance, le couple simulé de l'arbre ou une vitesse de rotation (nV') simulée à partir de ce couple, et à l'entrée de la valeur de la valeur de consigne de ce régulateur, une valeur de mesure correspondante (MW ou nV) prélevée sur le générateur de couple.

2. Dispositif de surveillance électronique suivant la revendication 1, caractérisé par le fait que le modèle de calcul est un modèle statique (Stat') servant à calculer algébriquement un couple statique de l'arbre (MZ') qui correspond au couple de l'arbre pendant le fonctionnement stationnaire, qu'en série avec le modèle statique est branché un modèle dynamique (Dyn') réglé sur la fréquence propre excitée du couple de l'arbre et contenant les deux intégrateurs.

3. Dispositif de surveillance électronique suivant la revendication 2, caractérisé par le fait que les deux intégrateurs (INT1', INT2') sont branchés en série et sont respectivement normalisés individuellement sur la fréquence (w) des oscillations propres excitées.

4. Dispositif de surveillance électronique suivant la revendication 3, caractérisé par un circuit d'identification, auquel sont envoyés les signaux d'entrée (BC) des deux intégrateurs et la valeur de mesure, et qui comporte une sortie pour le prélèvement d'un signal de différence de fréquence (R.d@/dt), et des moyens (RF), qui permettent de modifier la durée d'intégration des intégrateurs jusqu'à faire disparaître le signal de différence de fréquence.

5. Dispositif de surveillance électronique suivant la revendication 3, caractérisé par un dispositif de déphasage (VD3), à l'aide duquel le signal d'entrée de l'un des intégrateurs contenus dans le modèle dynamique est décalé d'un angle de phase (d), qui dépend de la fréquence propre, et est multiplié par un facteur (D) qui dépend de la fréquence.

6. Dispositif de surveillance électronique suivant la revendication 1, caractérisé par un dispositif servant à identifier le rapport des moments d'inertie du générateur de couple et de la machine de charge, et comportant une entrée pour la valeur simulée (MV') du couple interne, une sortie pour la valeur de paramètre (g'), associée au modèle de calcul, du rapport des moments d'inertie, et des moyens, à l'aide desquels on modifie la valeur de paramètre jusqu'à ce que des variations de la valeur simulée, qui apparaissent dans le cas de variations du couple de la machine d'entraînement, deviennent minimales.

7. Dispositif de surveillance électronique suivant la revendication 1, caractérisé par un dispositif redresseur, qui, moyennant une pondération des variations de la valeur simulée avec la polarité des variations du couple de l'arbre d'entraînement, fournit un signal unipolaire de régulation pour les variations de la valeur de paramètre.

8. Procédé pour déterminer le couple interne d'un générateur de couple, présentant les caractéristiques suivantes:

a) on accouple élastiquement le générateur de couple (PIS), par l'intermédiaire d'un arbre, à une machine de charge, dont on détermine le couple interne,

b) à partir du couple interne (ME) de la machine de charge et d'une valeur simulée (MV') du couple interne du générateur de couple, on forme par voie électronique une valeur équivalente simulée (MW') pour le couple simulé au moyen de l'arbre, à savoir ce qu'on appelle le "couple simulé de l'arbre",

c) on compare la valeur équivalente (MW') ou une vitesse de rotation (nV'), simulée électroniquement à partir de cette valeur, du générateur de couple, en tant que valeur réelle, à une valeur de mesure correspondante (MW ou nV), qui est prélevée dans le générateur de couple, en tant que valeur de consigne, et on règle le résultat de la comparaison en modifiant la valeur simulée pour le couple interne du générateur de couple, et

d) on prélève la valeur simulée du couple interne du générateur de couple.

9. Procédé suivant la revendication 8, caractérisé par le fait que pour la simulation électronique du moment de l'arbre, une valeur statique (MZ') du couple simulé de l'arbre est tout d'abord calculée, dans un modèle de calcul algébrique (Stat'), à partir de la valeur de mesure (ME) du couple de la machine de charge et de la valeur simulée (MV'), valeur statique d'où est tiré, par double intégration, le couple simulé de l'arbre (MW').

10. Procédé suivant la revendication 9, caractérisé par le fait qu'une fréquence propre (w) est déterminée à partir des fonctions (B, C) de l'intégration double et de la valeur de mesure (MW) du couple de l'arbre et que les constantes de temps de chaque intégration sont déterminées pour la fréquence propre.

11. Procédé suivant la revendication 8, caractérisé par le fait qu'on applique des variations (MI) au couple de la machine de charge, qu'on détecte des variations (DMW) de la valeur simulée du couple interne, qui sont synchrones des variations précédentes, et qu'en modifiant un paramètre (g') utilisé lors de la simulation du couple statique de l'arbre, on réduit au minimum les variations détectées (DMV) de la valeur simulée (MV').

12. Procédé pour contrôler un générateur de couple présentant les caractéristiques suivantes:
a) on raccorde un arbre de rotation du générateur de couple, sur un banc d'essai, à une machine de charge, dont on détermine le couple interne (ME),
b) dans un régulateur (REG, figure 16), on prélève une valeur simulée (MV') du couple interne du générateur de couple,
c) à partir de la valeur simulée (MV') du couple interne du générateur de couple et à partir du couple interne (ME) de la machine de charge, on forme, dans un modèle électronique (Stat'+Dyn') qui simule un accouplement élastique entre le générateur de couple et la machine de charge, un couple simulé de l'arbre (MW') pour le couple substitué au banc d'essai, par l'intermédiaire de l'arbre, entre la machine de charge et le générateur de couple,
d) le couple simulé (MW') ou une vitesse de rotation simulée (nV') du générateur de couple, qui est formée à partir de la valeur simulée du couple interne du générateur de couple et du couple simulé de l'arbre, est envoyée en tant que valeur réelle au régulateur et une valeur correspondante, mesurée au banc d'essai, est envoyée en tant que valeur de consigne au régulateur,
e) des données (MF, TF, CF) d'une charge, qui est raccordée au générateur de couple selon un fonctionnement réel à contrôler, sont tirées d'un programme d'essai (PROG), et une valeur de consigne (MW'*) du modèle, qui contient des oscillations, et une valeur de consigne (nV'*) de la vitesse de rotation du générateur de couple, est formée à partir de la valeur de consigne du modèle et de la valeur de consigne (MV') du couple interne du générateur de couple,
f) un autre régulateur (RN), dont la constante de temps est élevée par rapport à la constante de temps des oscillations propres du banc d'essai, forme une valeur de consigne supplémentaire (DMW*) du couple de l'arbre à partir de la vitesse de rotation de consigne et de la vitesse de rotation (nV), mesurée au banc d'essai, du générateur de couple,
g) la valeur de consigne du modèle et la valeur de consigne supplémentaire sont converties en une valeur de consigne (ME*) pour le couple interne de la machine de charge,
h) le couple interne de la machine de charge est réglé sur la valeur de consigne calculée.

13. Procédé suivant la revendication 12, caractérisé par le fait que la valeur de consigne (MW'*) et une valeur de consigne (MW) du couple de l'arbre sont envoyées à un régulateur (RM) du couple de l'arbre, dont le signal de sortie est appliqué, en tant qu'autre valeur de consigne supplémentaire, à la valeur de consigne simulée du couple de l'arbre.

14. Procédé suivant la revendication 12, caractérisé par le fait que la fréquence (w) d'une oscillation élastique excitée au banc d'essai est déterminée à partir de la valeur de mesure (MW) du couple de l'arbre du banc d'essai et que le modèle dynamique (Dyn') est réglé sur cette fréquence.

15. Procédé suivant la revendication 14, caractérisé par le fait qu'un signal déphasé d'amortissement (E) est formé en fonction de la fréquence (w) de l'oscillation élastique et est appliqué à la valeur de consigne simulée du couple de l'arbre.

FIG 1

FIG 2

FIG 3

FIG 4

FIG 5

FIG 6

FIG 7

FIG 8

EP 0 280 948 B1

FIG 9

FIG 10

FIG 11

FIG 12

FIG 13

FIG 14

FIG 15

FIG 16

FIG 17

FIG 18